# EUROPEAN PATENT SPECIFICATION

(11) **EP 3 541 199 B1**
(45) Date of publication and mention of the grant of the patent: **21.02.2024**
(21) Application number: 17829507.7
(22) Date of filing: 20.12.2017
(51) Int. Cl.: A23K 10/30, A23K 20/163, A23K 50/40

(54) **PET FOOD COMPOSITIONS AND METHODS FOR PREPARING THE SAME**
HAUSTIERFUTTERZUSAMMENSETZUNGEN UND VERFAHREN ZU DEREN HERSTELLUNG
COMPOSITIONS D'ALIMENTS POUR ANIMAUX DE COMPAGNIE ET PROCÉDÉS CORRESPONDANTS

(30) Priority: 27.12.2016 US 201662439214 P
(43) Date of publication of application: 25.09.2019
(73) Proprietor: Hill's Pet Nutrition, Inc., Topeka, KS 66603 (US)
(72) Inventor: EPHRAIM, Eden, Lawrence, Kansas 66049 (US); JACKSON, Matthew, Topeka, Kansas 66604 (US); JEWELL, Dennis, Lawrence, Kansas 66049 (US)
(74) Representative: Wichmann, Hendrik
(86) International application number: PCT/US2017/067502
(87) International publication number: WO 2018/125696

(56) References cited:
- WO-A1-2015/197714
- CN-A- 101 627 799
- US-A1- 2010 003 368
- US-A1- 2010 203 225
- US-A1- 2011 014 327

## Description

### FIELD

The present disclosure relates to methods of using and making pet food compositions including fermentable fibers and betaine. The invention is defined by the appended claims.

### BACKGROUND

Enhancing the palatability of animal food is a continuing endeavor by food manufacturers. Addition of palatants to the food is desirable as a means to increase acceptance by the animals, resulting in, for example, overall improved health of the animal, maintenance of weight, and increased weight gain.

Current pet food products do not adequately offer palatability enhancing properties. Such properties are useful, for example, to increase food intake in aging dogs and cats, which may generally suffer from decreased food intake. WO 2015/197714 A1 discloses a method of improving the food intake and weight gain of animals, preferably aquatic animals and providing an effective amount of a feed composition comprising betaine as palatability enhancer (0.25 wt %) and fermentable fiber from wheat flour, soybean and rice bran. CN 101 627 799 A describes a fish feed composition comprising 1,5-2,5 mg FOS/100g, 2,4-2,8 mg beta-glucan and 75-300 mg/100g betaine. Accordingly, there is a need for pet food compositions to offer palatability enhancing properties.

### BRIEF SUMMARY

It has been surprisingly found that pet food compositions including fermentable fibers and betaine possess palatability enhancing effects. Such pet food compositions show an unexpected increase in palatability and subsequent food intake.

A method for improving food intake of a pet is provided. The method includes providing an effective amount of a pet food composition including fermentable fibers and betaine to a pet, wherein the pet food is in a wet formulation. The fermentable fibers comprise a mixture of short-chain fructo-oligosaccharides (scFOS) and beta-glucan. In further embodiments, the beta-glucan may be oat fiber. The beta-glucan is present in an amount of 0.01 to 0.08% by weight of the pet food composition. In certain embodiments, the fermentable fibers may be present at a molar ratio of between 2:1 to 4:1 scFOS to beta-glucan. In certain embodiments, the fermentable fibers may be present at a molar ratio of 3: 1 scFOS to beta-glucan. The betaine is present in an amount of 0.05 to 0.5% by weight of the pet food composition. In further embodiments, the betaine may be present in an amount of 0.08 to 0.3% by weight of the pet food composition. In further embodiments, the betaine may be present at 0.137% by weight of the pet food composition. The scFOS is present in an amount of 0.05 to 0.5% by weight of the pet food composition. In certain embodiments, the scFOS may be present in an amount of 0.08 to 0.3% by weight of the pet food composition. In certain embodiments, the pet may be a feline.

Further a method for manufacturing a pet food composition including fermentable fibers and betaine is provided. The fermentable fibers comprise a mixture of short chain fructo-oligosaccharides (scFOS) and beta-glucan. In further embodiments, the beta-glucan may be oat fiber. The beta-glucan is present in an amount of 0.01 to 0.08% by weight of the pet food composition. In certain embodiments, the fermentable fibers may be present at a molar ratio of between 2:1 to 4:1 scFOS to beta-glucan. In certain embodiments, the fermentable fibers may be present at a molar ratio of 3:1 scFOS to beta-glucan. In certain embodiments, the betaine may be present in an amount of 0.05 to 0.5% by weight of the pet food composition. In further embodiments, the betaine may be present in an amount of 0.08 to 0.3% by weight of the pet food composition. In certain embodiments, the betaine may be present at 0.137% by weight of the pet food composition. The scFOS is present in an amount of 0.05 to 0.5% by weight of the pet food composition. In certain embodiments, the scFOS may be present in an amount of 0.08 to 0.3% by weight of the pet food composition.

A pet food composition obtained or obtainable by combining the ingredients as set forth in any of the preceding compositions and methods is described.

### DETAILED DESCRIPTION

As used herein, the words "preferred" and "preferably" refer to embodiments that afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the disclosure.

As used herein, the term "food" may refer not only to a food product which typically provides most, if not all, the nutrient value for a companion animal, but may also refer to such items as a snack, treat, supplement, and the like.

As used throughout, ranges are used as shorthand for describing each and every value that is within the range. Any value within the range can be selected as the terminus of the range.

Unless stated otherwise, all percentages of composition components given in this specification are by weight based on a total composition or formulation weight of 100%.

The term "effective amount" as used herein means that the amount of the composition may be of sufficient quantity to achieve the intended purpose, such as, for example, to induce or cause increased food intake in the subject. Such effective activity may be achieved, for example, by administration of compositions of the present disclosure to an animal. An effective amount may be based on several factors, including an animal's ideal weight, the metabolizable energy of the composition, and frequency of feeding the animal one or more compositions of the present disclosure, e.g., once, twice, or three times daily, and other compositions fed to the animal.

The compositions and formulations as provided herein may be described with reference to their ingredients, as is usual in the art. As would be evident to one skilled in the art, the ingredients may in some instances react with one another, so that the true composition of the final formulation may not correspond exactly to the ingredients listed. Thus, it should be understood that the compositions of the present disclosure extend to the product of the combination of the listed ingredients.

It has been surprisingly found that pet food compositions including fermentable fibers and betaine possess palatability enhancing effects. Such pet food compositions show an unexpected increase in palatability and subsequent food intake.

The pet food compositions includes fermentable fibers and betaine. Such compositions may provide unique features, such as enhanced palatability characteristics, useful in food compositions, particularly pet food compositions. The inventors have surprisingly and unexpectedly discovered that adding fermentable fibers and betaine to wet pet food compositions for consumption by an animal enhances palatability of the composition and increases the likelihood that an animal will consume the composition.

"Fermentable fibers" may be plant parts or carbohydrates resistant to digestion and absorption in the small intestine and may be fermented by colonic microorganisms. Examples of fermentable fibers may include simple carbohydrates such as short-chain fructo-oligosaccharides (scFOS), galacto-oligosaccharides (GOS), oligo-fructans and complex polysaccharides such as long chain inulin, beta-glucans, pectin, resistant starch as well as fruit or vegetable extracts rich in fiber, such as apple pomace, tomato pomace, cranberry pomace, beet pulp and citrus pulp.

The fermentable fibers comprise a mixture of beta-glucan and scFOS. In certain embodiments, the composition may include 0.05 to 0.6% by weight of the fermentable fibers. In certain embodiments, the composition may include 0.1 to 0.4% by weight of the fermentable fibers.

The fermentable fibers comprise a mixture of short chain fructo-oligosaccharides (scFOS) and beta-glucan. In certain embodiments, the scFOS and beta-glucan may be mixed at a ratio of 2:1 to 4:1 weight ratio. In a certain embodiment, the scFOS and beta-glucan may be mixed at a ratio of 3:1 weight ratio, i.e. 0.105% of scFOS and 0.0352% of beta-glucan.

Beta glucans may be sugars that are found in the cell walls of bacteria, fungi, yeasts, algae, lichens, and plants, such as oats and barley. The beta-glucan may be from any source known to one skilled in the art. In a preferred embodiment, the beta-glucan may be oat fiber. The beta-glucan is present in an amount of 0.01 to 0.08% by weight of the pet food composition. In certain embodiments, the beta-glucan may be present in an amount of 0.02 to 0.05% by weight of the pet food composition. In certain embodiments, the beta-glucan may be present in an amount of 0.03 to 0.04% by weight of the pet food composition.

The composition includes betaine in an amount of 0.05 to 0.5% by weight of the pet food composition. In certain embodiments, the composition may include betaine in an amount of 0.08 to 0.3% by weight. In certain embodiments, the composition may include betaine in an amount of 0.1 to 0.2% by weight of the pet food composition. In a further embodiment, the composition may include betaine at 0.137% by weight of the pet food composition.

In certain embodiments, the composition may include scFOS and oat fiber at a 3:1 weight ratio. In a further embodiment, the composition may include scFOS and oat fiber at a 3:1 weight ratio and betaine at 0.137 wt %. In a further embodiment, the composition may include scFOS and oat fiber, having a combined total wt % of 0.14, at a 3:1 weight ratio and betaine at 0.137 wt %.

In some embodiments, fermentable fibers and betaine may be present in a combined amount of 0.1 to 1.1% by weight of the pet food composition. In a further embodiment, the fermentable fibers and betaine may be present in a combined amount of 0.2 to 0.9% by weight of the pet food composition. In a further embodiment, the fermentable fibers and betaine may be present in a combined amount of 0.2 to 0.7% by weight of the pet food composition. In a further embodiment, the fermentable fibers and betaine may be present in a combined amount of 0.2 to 0.5% by weight of the pet food composition. In further embodiments, fermentable fibers and betaine may be present in a combined amount 0.2 to 0.3% by weight of the pet food composition. In certain embodiments, the fermentable fibers and betaine may be 0.2777% by weight of the pet food composition.

Methods to improve food intake of a pet are provided. The method may include providing an effective amount of the pet food composition of any of the compositions described herein to the oral cavity of a pet in need thereof. A method for improving food intake of a pet is provided, and includes providing an effective amount of the pet food composition of any of the compositions described herein to a pet. In certain embodiments, the method uses a solid or liquid pet food composition. The pet is a feline. In further compositions, methods for manufacturing a pet food composition including fermentable fibers and betaine are provided.

In certain aspects, a method to increase body weight in a feline with renal insufficiency may be provided, and may include providing an effective amount of a pet food composition including fermentable fibers and betaine. In certain embodiments, the pet food composition may include scFOS and oat fiber at a 3:1 weight ratio. In a further embodiment, the pet food composition may include scFOS and oat fiber at a 3:1 weight ratio and betaine at 0.137 wt %. In a further embodiment, the pet food composition may include a composition including scFOS and oat fiber, having a combined total wt % of 0.14, at a 3:1 weight ratio and betaine at 0.137 wt %.

A method to improve food intake of a pet is provided, and includes providing an effective amount of a pet food composition including fermentable fibers and betaine to a pet, wherein the pet food composition is in a wet formulation. In certain embodiments, the pet food composition may include scFOS and oat fiber at a 3:1 weight ratio. In a further embodiment, the composition may include scFOS and oat fiber, having a combined total wt % of 0.14, at a 3:1 weight ratio and betaine at 0.137 wt %.

In certain aspects, a method to increase body weight in a feline with renal insufficiency may be provided, and may include providing an effective amount of a pet food composition including fermentable fibers and betaine. In certain embodiments, the pet food composition may include scFOS and oat fiber at a 3:1 weight ratio. In a further embodiment, the pet food composition may include scFOS and oat fiber at a 3:1 weight ratio and betaine at 0.137 wt %. In a further embodiment, the composition may include scFOS and oat fiber, having a combined total wt % of 0.14, at a 3:1 weight ratio, and betaine at 0.137 wt %.

A method of manufacturing a pet food composition including fermentable fibers and betaine is provided. In certain embodiments, the pet food composition may include scFOS and oat fiber at a 3:1 weight ratio. In a further embodiment, the pet food composition may include scFOS and oat fiber, having a combined total wt % of 0.14, at a 3:1 weight ratio, and betaine at 0.137 wt %.

Pet food compositions may contain protein, fat, carbohydrate, dietary fiber, and/or nutritional balancing agents. Specific suitable amounts for each component in a composition will depend on a variety of factors such as the species of animal consuming the composition; the particular components included in the composition; the age, weight, general health, sex, and diet of the animal; the animal's consumption rate; and the like. Thus, the component amounts may vary widely, and may even deviate from the proportions set forth herein.

A "nutritionally complete diet" may be a diet that may include sufficient nutrients for maintenance of normal health of a healthy animal on the diet. In certain aspects, the pet food composition(s) may be blended with a nutritionally complete diet and/or balanced food diet.

For example, a nutritionally complete and balanced pet (e.g., dog, cat, etc.) food composition may comprise: about 0 to about 90%, preferably about 5% to 60%, by weight of carbohydrates; about 5% to about 70%, preferably about 10% to about 60%, more preferably about 20% to about 50%, by weight of protein: about 1% to about 50%, preferably about 2% to about 40%, more preferably about 3% to about 150%, by weight of fat; about 0.1% to about 40%, preferably about 1% to about 30%, more preferably about 15% to about 50%, by weight of total dietary fiber; about 0 to about 15%, preferably about 2% to about 8%, by weight of vitamins and minerals, antioxidants, and other nutrients which support the nutritional needs of the animal.

Protein may be supplied by any of a variety of sources known by those skilled in the art, including plant sources, animal sources, or both. Animal sources may include, for example, meat, meat by-products, seafood, dairy and eggs. Meats may include, for example, the flesh of poultry, fish, and mammals (e.g., cattle, pigs, sheep, goats, and the like). Meat by-products may include, for example, lungs, kidneys, brain, livers, and stomachs and intestines (freed of all or essentially all their contents). The protein can be intact, almost completely hydrolyzed, or partially hydrolyzed. The amount of "crude protein" in a composition disclosed herein may be determined based on the amount of nitrogen in the composition according to methods familiar to one of skill in the art. As contemplated herein, the compositions may comprise from about 5% to about 70% protein, from about 10% to about 60% protein, from about 20% to about 50% protein, from about 25% to about 40% protein, and from about 29% to about 38% protein.

In certain embodiments, the pet food compositions disclosed herein may comprise fat. Sources of fat for the compositions can be supplied by any of a variety of sources known by those skilled in the art, including meat, meat by-products, fish oil, and plants. Plant fat sources may include wheat, flaxseed, rye, barley, rice, sorghum, corn, oats, millet, wheat germ, corn germ, soybeans, peanuts, and cottonseed, as well as oils derived from these and other plant fat sources. As contemplated herein, the compositions may comprise from about 1% to about 20% fat, from about 2% to about 18% fat, from about 3% to about 15% fat, from about 7% to about 14% fat, and from about 9% to about 12% fat.

In certain embodiments, the pet food compositions disclosed herein may comprise fat and carbohydrate. The fat and carbohydrate food ingredient may be obtained from a variety of sources such as animal fat, fish oil, vegetable oil, meat, meat by-products, grains, other animal or plant sources, and mixtures thereof. Grains may include wheat, corn, barley, and rice.

In certain embodiments, the pet food compositions disclosed herein may comprise fiber. The fiber food ingredient may be obtained from a variety of sources such as vegetable fiber sources, e.g., cellulose, beet pulp, peanut hulls, and soy fiber.

The compositions may further contain additives known in the art. Preferably, such additives may be present in amounts that do not impair the purpose and effect disclosed herein. Examples of contemplated additives may include, for example, substances that may be functionally beneficial to weight management, substances with a stabilizing effect, processing aids, substances that enhance palatability, coloring substances, and substances that provide nutritional benefits.

Contemplated substances that may provide a benefit for weight management may include, for example, nonfermentable fiber, carnitine, chrominium-picolinate, and the like.

Contemplated stabilizing substances may include, for example, substances that tend to increase the shelf life of the composition. Potentially suitable examples of such substances may include, for example, preservatives, antioxidants, synergists and sequestrants, packaging gases, stabilizers, emulsifiers, thickeners, gelling agents, and humectants. Examples of emulsifiers and/or thickening agents may include, for example, gelatin, cellulose ethers, starch, starch esters, starch ethers, and modified starches.

Contemplated additives for coloring, palatability, and nutritional purposes may include, for example, colorants; iron oxide, sodium chloride, potassium citrate, potassium chloride, and other edible salts; vitamins; minerals; and flavoring. The amount of such additives in a composition typically may be up to 5% (dry basis of the composition).

Supplements may include, for example, a feed used with another feed to improve the nutritive balance or performance of the total. Contemplated supplements may include compositions that may be fed undiluted as a supplement to other feeds, offered free choice with other parts of an animal's ration that may be separately available, or diluted and mixed with an animal's regular feed to produce a complete feed. The Association of American Feed Control Officials (AAFCO), for example, provides a discussion relating to supplements in the American Feed Control Officials, Inc. Official Publication, p. 220 (2003). Supplements may be in various forms including, for example, powders, liquids, syrups, pills, etc.

The methods to improve food intake of a pet include applying an effective amount of the pet food composition including fermentable fibers and betaine to the oral cavity of a pet in need thereof. In certain embodiments, methods for improving food intake of a pet may include applying an effective amount of the pet food composition including fermentable fibers and betaine to the oral cavity of a pet in need thereof. The methods to improve food intake of a pet include applying an effective amount of the pet food composition including fermentable fibers and betaine to the oral cavity of a pet in need thereof, wherein the pet is a feline. In certain embodiments, methods to improve food intake of a pet may include applying an effective amount of the pet food composition including fermentable fibers and betaine to the oral cavity of a pet in need thereof, wherein the pet food composition liquid.

The methods to manufacture a pet food composition including fermentable fibers and betaine is provided. In certain embodiments, the pet food composition may be in solid or liquid form. The pet food composition is in wet form.

Compositions may be prepared in a canned or wet form using conventional pet food processes. In one contemplated embodiment, ground animal and poultry proteinaceous tissues may be mixed with the other ingredients, including fish oils, cereal grains, other nutritionally balancing ingredients, special purpose additives (e.g., vitamin and mineral mixtures, inorganic salts, cellulose and beet pulp, bulking agents, and the like); and water sufficient for processing may also be added. These ingredients may preferably be mixed in a vessel suitable for heating while blending the components. Heating of the mixture may be effected using any suitable manner, such as, for example, by direct steam injection or by using a vessel fitted with a heat exchanger. Following the addition of the last ingredient, the mixture may be heated to a temperature range of from about 50° F to about 212° F. Temperatures outside this range may be acceptable, but may be commercially impractical without the use of other processing aids. When heated to the appropriate temperature, the material will typically be in the form of a thick liquid. The thick liquid may be filled into cans. A lid may be applied, and the container may be hermetically sealed. The sealed can may then be placed into conventional equipment designed to sterilize the contents. This may be usually accomplished by heating to temperatures of greater than about 230° F for an appropriate time, which may be dependent on, for example, the temperature used and the composition.

In preparing the compositions, the components may be adjusted so that the fermentable fibers and betaine may be present in the composition at a concentration of at least 0. 1%, preferably from about 0.2% to about 0.5%, most preferably from about 0.25% to about 0.3% by weight of the composition. The fermentable fibers and betaine may be incorporated into the composition during the processing of the formulation, such as during and/or after mixing of other components of the composition. Distribution of these components into the composition may be accomplished by conventional means.

### Example 1 - Animal Palatability Testing of Food Containing Fermentable Fibers

Testing was performed to analyze palatability for dry and canned, or wet, formulations of the fermentable fibers and betaine. Control food included brewers rice, chicken fat, fresh meat, corn starch, guar gum, dextrose, fish oil menhaden, calcium sulfate, calcium carbonate, choline chloride, potassium citrate, glycine, L-cysteine hydrochloride monohydrate, vitamins (Vitamin E supplement, L-ascorbyl-2-polyphosphate (source of Vitamin C), niacin supplement, thiamine mononitrate, pyridoxine hydrochloride, calcium pantothenate, Vitamin A supplement, riboflavin supplement, Vitamin 1312 supplement, biotin, folic acid, Vitamin D3 supplement), iodized salt, taurine, minerals (ferrous sulfate, zinc oxide, copper sulfate, manganous oxide, calcium iodate, sodium selenite), mixed tocopherols for freshness, L-tryptophan, and DL-methionine and water. Test dry and wet canned foods were formulated by adding fermentable fibers and betaine to the control food formula to achieve final concentrations of 0.106 wt % of scFOS, 0.0352 wt % of oat fiber and 0.137 wt % betaine.

In a two-bowl palatability test, a group of 25 cats were offered the test dry food and the control dry food simultaneously for two days. Another group of 25 cats were offered a bowl of the test canned food and a control canned food simultaneously for two days. There was no significant difference in the preference or consumption of the dry foods regardless of presence of the fermentable fibers and betaine. However, the test food showed a significant increase in the palatability of the canned food (P=0.0105), with cats showing a strong preference (64%) to the test food. As a result, the intake of the test food was significantly higher than that of the control canned food (see Table 1).

**Table 1. Preference and intake enhancement in the test food**

| **Description** | |
|---|---|
| Percent Preferring Test Food | 64 |
| Percent Preferring Control Food | 28 |
| Average Intake of Test Food | 101.4 g |
| Average Intake of Control Food | 71.16 g |
| Standard Error | 0.031 |
| P-Value | 0.0105 |

## Claims

1. A method to improve food intake of a pet comprising providing an effective amount of a pet food composition comprising fermentable fibers and betaine to the pet, wherein the pet food composition is in a wet formulation, the fermentable fibers comprise a mixture of short chain fructo-oligosaccharides (scFOS) and beta-glucan, the beta-glucan is present in an amount of 0.01 to 0.08% by weight of the pet food composition, the scFOS is present in an amount of 0.05% to 0.5% by weight of the pet food composition, the betaine is present in an amount of 0.05% to 0.5% by weight of the pet food composition, and the pet is a feline.

2. The method of claim 1, wherein the beta-glucan is oat fiber.

3. The method of claim 1 or claim 2, wherein the fermentable fibers are present at a molar ratio of between 2:1 to 4:1 scFOS to beta-glucan.

4. The method of claim 3, wherein the fermentable fibers are present at a molar ratio of 3:1 scFOS to beta-glucan.

5. The method of any one of claims 1-4, wherein the betaine is present in an amount of 0.08% to 0.3% by weight of the pet food composition.

6. The method of claim 5, wherein the betaine is present at 0.137% by weight of the pet food composition.

7. The method of any one of claims 1-6, wherein the scFOS is present in an amount of 0.08% to 0.3% by weight of the pet food composition.

8. A method of manufacturing a pet food composition comprising contacting fermentable fibers with betaine, wherein the pet food composition is in wet form, the fermentable fibers comprise a mixture of short chain fructo-oligosaccharides (scFOS) and beta-glucan, the beta-glucan is present in an amount of 0.01 to 0.08% by weight of the pet food composition, the scFOS is present in an amount of 0.05% to 0.5% by weight of the pet food composition, the betaine is present in an amount of 0.05% to 0.5% by weight of the pet food composition, and the pet is feline.

9. The method of claim 8, wherein the beta-glucan is oat fiber.

## Patentansprüche

1. Verfahren zur Verbesserung der Nahrungsaufnahme eines Haustieres, umfassend die Bereitstellung einer wirksamen Menge einer Haustierfutterzusammensetzung, die fermentierbare Ballaststoffe und Betain umfasst, für das Haustier, wobei die Haustierfutterzusammensetzung in einer Feuchtformulierung vorliegt, die fermentierbaren Ballaststoffe ein Gemisch aus kurzkettigen Fructo-Oligosacchariden (scFOS) und Beta-Glucan umfassen, das Beta-Glucan in einer Menge von 0,01 bis 0,08 Gew.-% der Haustierfutterzusammensetzung vorhanden ist, die scFOS in einer Menge von 0,05 bis 0,5 Gew.-% der Haustierfutterzusammensetzung vorhanden sind, das Betain in einer Menge von 0,05 bis 0,5 Gew.-% der Haustierfutterzusammensetzung vorhanden ist, und das Haustier eine Katze ist.

2. Verfahren nach Anspruch 1, wobei das Beta-Glucan Haferfaser ist.

3. Verfahren nach Anspruch 1 oder 2, wobei die fermentierbaren Ballaststoffe in einem molaren Verhältnis von 2:1 bis 4:1 scFOS zu Beta-Glucan vorhanden sind.

4. Verfahren nach Anspruch 3, wobei die fermentierbaren Ballaststoffe in einem molaren Verhältnis von 3:1 scFOS zu Beta-Glucan vorhanden sind.

5. Verfahren nach einem der Ansprüche 1-4, wobei das Betain in einer Menge von 0,08 bis 0,3 Gew.-% der Haustierfutterzusammensetzung vorhanden ist.

6. Verfahren nach Anspruch 5, wobei das Betain in einer Menge von 0,137 Gew.-% der Haustierfutterzusammensetzung vorhanden ist.

7. Verfahren nach einem der Ansprüche 1 bis 6, wobei die scFOS in einer Menge von 0,08 bis 0,3 Gew.-% der Haustierfutterzusammensetzung vorhanden sind.

8. Verfahren zum Herstellen einer Haustierfutterzusammensetzung, umfassend das Inkontaktbringen fermentierbarer Ballaststoffe mit Betain, wobei die Haustierfutterzusammensetzung in Feuchtform vorliegt, die fermentierbaren Ballaststoffe ein Gemisch aus kurzkettigen Fructo-Oligosacchariden (scFOS) und Beta-Glucan umfassen, das Beta-Glucan in einer Menge von 0,01 bis 0,08 Gew.-% der Haustierfutterzusammensetzung vorhanden ist, die scFOS ist in einer Menge von 0,05 bis 0,5 Gew.-% der Haustierfutterzusammensetzung vorhanden sind, das Betain ist in einer Menge von 0,05 bis 0,5 Gew.-% der Haustierfutterzusammensetzung vorhanden ist, und das Haustier ist eine Katze ist.

9. Verfahren nach Anspruch 8, wobei das Beta-Glucan Haferfaser ist.

## Revendications

1. Procédé pour améliorer l'apport alimentaire d'un animal de compagnie comprenant la fourniture à l'animal de compagnie d'une quantité efficace d'une composition alimentaire pour animaux de compagnie comprenant des fibres fermentescibles et de la bétaïne, dans laquelle la composition alimentaire pour animaux de compagnie est dans une formulation humide, les fibres fermentescibles comprennent un mélange de fructo-oligosaccharides (scFOS) à chaîne courte et de bêta-glucane, le bêta-glucane est présent en une quantité de 0,01 à 0,08 % en poids de la composition alimentaire pour animaux de compagnie, le scFOS est présent en une quantité de 0,05 % à 0,5 % en poids de la composition alimentaire pour animaux de compagnie, la bétaïne est présente en une quantité de 0,05 % à 0,5 % en poids de la composition alimentaire pour animaux de compagnie, et l'animal de compagnie est un félin.

2. Procédé selon la revendication 1, dans lequel le bêta-glucane est une fibre d'avoine.

3. Procédé selon la revendication 1 ou la revendication 2, dans lequel les fibres fermentescibles sont présentes dans un rapport molaire compris entre 2:1 et 4:1 de scFOS par rapport au bêta-glucane.

4. Procédé selon la revendication 3, dans lequel les fibres fermentescibles sont présentes dans un rapport molaire de 3:1 de scFOS par rapport au bêta-glucane.

5. Procédé selon l'une quelconque des revendications 1 à 4, dans lequel la bétaïne est présente en une quantité de 0,08 % à 0,3 % en poids de la composition alimentaire pour animaux de compagnie.

6. Procédé selon la revendication 5, dans lequel la bétaïne est présente à raison de 0,137 % en poids de la composition alimentaire pour animaux de compagnie.

7. Procédé selon l'une quelconque des revendications 1 à 6, dans lequel le scFOS est présent en une quantité de 0,08 % à 0,3 % en poids de la composition alimentaire pour animaux de compagnie.

8. Procédé de fabrication d'une composition alimentaire pour animaux de compagnie comprenant la mise en contact de fibres fermentescibles avec de la bétaïne, dans lequel la composition alimentaire pour animaux de compagnie est sous forme humide, les fibres fermentescibles comprennent un mélange de fructo-oligosaccharides à chaîne courte (scFOS) et de bêta-glucane, le bêta-glucane est présent en une quantité de 0,01 à 0,08 % en poids de la composition alimentaire pour animaux de compagnie, le scFOS est présent en une quantité de 0,05 % à 0,5 % en poids de la composition alimentaire pour animaux de compagnie, la bétaïne est présente en une quantité de 0,05 % à 0,5 % en poids de la composition alimentaire pour animaux de compagnie, et l'animal de compagnie est un félin.

9. Procédé selon la revendication 8, dans lequel le bêta-glucane est une fibre d'avoine.
